# FASCICULE DE BREVET EUROPEEN

(11) **EP 0 763 318 B1**
(45) Date de publication et mention de la délivrance du brevet: **27.03.2002**
(21) Numéro de dépôt: 96401730.5
(22) Date de dépôt: 05.08.1996
(51) Int. Cl.: A01D 33/14, A01D 25/00, A01D 27/00

(54) **Machine d'arrachage de racines ou tubercules cultivés en ligne**
Maschine um Rüben oder Kartoffeln in Reihen stehend, zu Ernten
Machine harvesting rootcrops planted in a line

(30) Priorité: 07.08.1995 FR 9509569
(43) Date de publication de la demande: 19.03.1997
(73) Titulaire: ETABLISSEMENTS JEAN MOREAU, 59159 Marcoing (FR)
(72) Inventeur: Jette, Etienne, 59159 Marcoing (FR)
(74) Mandataire: Colas, Jean-Pierre

(56) Documents cités:
- EP-A- 0 460 981
- DE-A- 2 125 227
- DE-C- 4 228 584
- DE-U- 9 413 431
- FR-A- 2 128 153
- FR-A- 2 133 200
- FR-A- 2 670 075

## Description

La présente invention est relative à une machine d'arrachage de racines ou tubercules cultivés en lignes à peu près parallèles, cette machine étant capable de se déplacer dans une direction parallèle auxdites lignes.

Des machines de ce type comportent habituellement un châssis principal, pourvu de roues, et sur lequel est monté un bâti porteur, qui porte plusieurs outils d'arrachage, par exemple six, chaque outil d'arrachage, en forme de soc ou de disque, étant conçu pour travailler en pénétrant dans le sol pendant le déplacement de la machine.

Des forces importantes sont nécessaires pour faire pénétrer les outils d'arrachage dans le sol pendant le déplacement et les maintenir dans une position correcte malgré les variations locales de la réaction du sol. Les forces sont transmises aux outils d'arrachage depuis le châssis principal par l'intermédiaire du bâti porteur.

En général, le bâti porteur comprend une poutre transversale, à section carrée, rectiligne, sur laquelle sont solidement fixés des organes de maintien des outils d'arrachage.

Les moyens reliant le châssis principal au bâti porteur assurent la transmission des forces tout en permettant des déplacements relatifs dans une ou plusieurs directions d'un plan vertical perpendiculaire à la direction de déplacement, comme décrit en particulier dans le document EP-A-0460981.

Il est ainsi possible, notamment, de placer au mieux les outils d'arrachage en ce qui concerne leur profondeur d'enfoncement dans le sol.

Cependant, la disposition qu'on vient d'exposer exige, pour être complètement efficace, que le sol soit plan, ou plus exactement ait une section rectiligne dans une direction perpendiculaire au déplacement, au moins dans la région qui se trouve au-dessous de la poutre à laquelle sont fixés les outils d'arrachage.

Si le sol n'est pas plan dans cette région, la profondeur de pénétration des outils d'arrachage ne sera pas conforme partout à ce qui est préférable. Ce problème augmente en importance si la largeur de terrain traitée à chaque passage de la machine est augmentée.

Des problèmes similaires sont apparus depuis longtemps dans le domaine des appareils de pulvérisation, qui traitent à chaque fois des bandes de terrain de largeurs beaucoup plus importantes que celles qui sont usuelles pour les machines d'arrachage.

En particulier, le document FR-A-2296368 décrit un dispositif de pulvérisation qui comprend un châssis formé de plusieurs tronçons de châssis alignés dans le sens transversal, reliés entre eux par des articulations à axe longitudinal, c'est-à-dire parallèle à la direction de déplacement. Des roues de guidage maintiennent chaque tronçon de châssis à peu près parallèle au sol qui se trouve sous lui, et à une hauteur à peu près constante au-dessus du sol. Des tronçons de rampe de pulvérisation séparés sont suspendus aux tronçons de châssis, avec des moyens pour régler leur hauteur et leur position dans le sens transversal.

Il n'est pas possible de transmettre, depuis les tronçons de châssis jusqu'aux tronçons de rampe, une force comparable à celles qui sont nécessaires pour faire pénétrer un outil d'arrachage dans le sol. Il n'est pas non plus prévu de moyens pour transmettre des forces d'un tronçon de châssis à un autre. Pour ces raisons, il n'est pas possible d'utiliser la structure du document ci-dessus dans une machine d'arrachage.

Le document DE-U-94 13436, qui sert de base au préambule de la revendication 1, décrit une variante de la structure classique de machine d'arrachage, dans laquelle les organes de maintien des outils d'arrachage, au lieu d'être solidement fixés sur une poutre transversale, peuvent coulisser transversalement le long de celle-ci sous l'effet de vérins, en prenant appui sur une autre poutre transversale à l'aide de galets, ce qui assure la transmission des forces nécessaires à l'enfoncement des outils d'arrachage depuis le châssis sur lequel sont montées les poutres.

Cette structure assure une certaine mobilité des outils d'arrachage dans la direction transversale, mais ne permet pas d'adapter la profondeur désirée d'enfoncement des outils d'arrachage à des variations du profil en travers du terrain situé sous les poutres.

L'invention a pour but de fournir une machine d'arrachage qui permette d'obtenir la profondeur d'enfoncement dans le sol des outils d'arrachage même lorsque la surface du sol n'est pas plane, vue dans la direction de déplacement.

Pour obtenir ce résultat, l'invention fournit une machine d'arrachage de racines ou tubercules cultivés en lignes à peu près parallèles, cette machine étant capable de se déplacer dans une direction parallèle auxdites lignes, et comportant un châssis principal sur lequel sont montés au moins deux bâtis porteurs portant chacun un outil d'arrachage ou un groupe d'outils d'arrachage, chaque outil d'arrachage étant conçu pour travailler en pénétrant dans le sol pendant le déplacement de la machine, au moins un bâti porteur étant mobile en rotation par rapport au châssis principal autour d'une articulation longitudinale,
la machine comprenant en outre des moyens moteurs pour déplacer ledit bâti porteur dans une direction horizontale, perpendiculaire à la direction de déplacement sur un cadre intermédiaire monté sur l'articulation, le bâti porteur pouvant coulisser sur ce cadre intermédiaire en se rapprochant ou s'écartant de l'articulation.

Selon un autre mode de réalisation pratique, plus compliqué mais qui assure un meilleur centrage des masses, les moyens pour modifier la position d'un bâti porteur comprennent un pivot longitudinal fixe par rapport au bâti porteur, et une pièce intermédiaire, montée sur le pivot, et qui peut coulisser par rapport au châssis principal dans une direction horizontale transversale.

Ces deux modes de réalisation permettent, dans le cas de passes de grande largeur, d'éviter les inconvénients résultant, par exemple, d'un écart irrégulier entre des lignes de végétaux provenant de passes différentes d'une machine à semer.

De préférence, on prévoit que chaque bâti porteur porte plusieurs outils d'arrachage, et est pourvu de moyens pour faire varier l'écartement entre deux outils d'arrachage. On dispose dans ce cas d'une machine qui peut s'adapter aux différentes habitudes et règles concernant l'écartement des lignes.

L'invention va maintenant être décrite d'une façon plus détaillée à l'aide d'exemples pratiques d'arracheuses de betteraves illustrés avec les dessins parmi lesquels :
Figure 1 est une vue de côté d'une machine selon l'invention, et
Figure 2 est une vue de dessus de la même machine.
Figure 3 est une vue de côté montrant la liaison entre le bâti central et les outils d'arrachage,
Figure 4 est une coupe selon la ligne IV-IV de la figure 3
Figure 5 est une vue de dessus montrant un bâti latéral
Figure 6 est une vue en coupe selon la flèche VI de la figure 5
Figure 7 est une vue de face d'une variante de la disposition des figures 3 à 6.

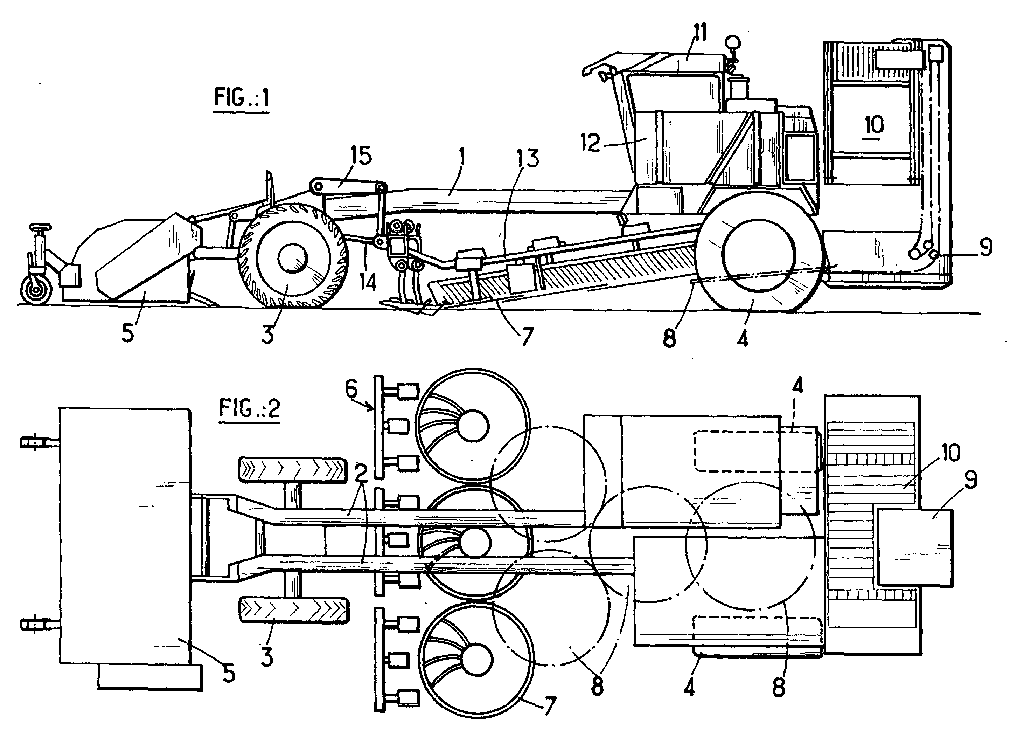

La machine décrite aux figures 1 et 2 comprend un châssis 1 formé de deux robustes longerons 2, et portant deux roues avant 3 et deux roues arrière 4. A l'avant, la machine porte un dispositif d'effeuillage de betteraves 5. Entre les roues avant 3 et arrière 4 est disposé un ensemble d'outils d'arrachage 6, qui sont représentés ici de façon schématique, car ils seront décrits plus en détail en se référant aux autres figures. Trois disques de ramassage 7 sont situés en arrière de l'ensemble d'arrachage, selon une même ligne transversale. De façon classique, ces disques de ramassage 7 sont disposés de façon légèrement inclinée vers l'avant. Les disques de ramassage se déversent dans des disques de transfert 8, représentés de façon schématique. Ces derniers transfèrent les betteraves jusqu'à un dispositif élévateur 9 qui les déverse dans une trémie d'attente 10. Le châssis porte encore une cabine de conduite 11 et un moteur 12.

On observera que, en vue de côté, la machine est sensiblement identique à une machine classique. Cependant, en vue de dessus, la différence avec une machine de type courant consiste essentiellement dans la présence de trois disques ramasseurs, alors que les machines usuelles n'en comportent que deux, et en ce que le dispositif d'arrachage comporte un nombre d'outils d'arrachage 6 supérieur à ce qu'on voit habituellement, soit 9 outils alors que les machines classiques ne dépassent pas 6 outils.

Un bâti central 13 est relié à l'avant du châssis, de façon articulée, par un élément de traction 14, qui transmet au bâti les forces horizontales destinées à faire avancer l'ensemble d'arrachage. La partie avant du bâti est en outre reliée au châssis par un ensemble de levage 15, qui permet de régler l'enfoncement des outils d'arrachage dans le sol et de les relever pour les déplacements hors des champs. La partie arrière du bâti central est également supportée par le châssis, grâce à des moyens articulés non représentés. L'ensemble des liaisons du bâti central au châssis est telle que celle qui est décrite dans le document EP-A-0460981 déjà cité.

A la différence du dispositif décrit dans ce document, le bâti central 13 porte ici seulement 3 outils d'arrachage 6, et un seul disque de ramassage 7.

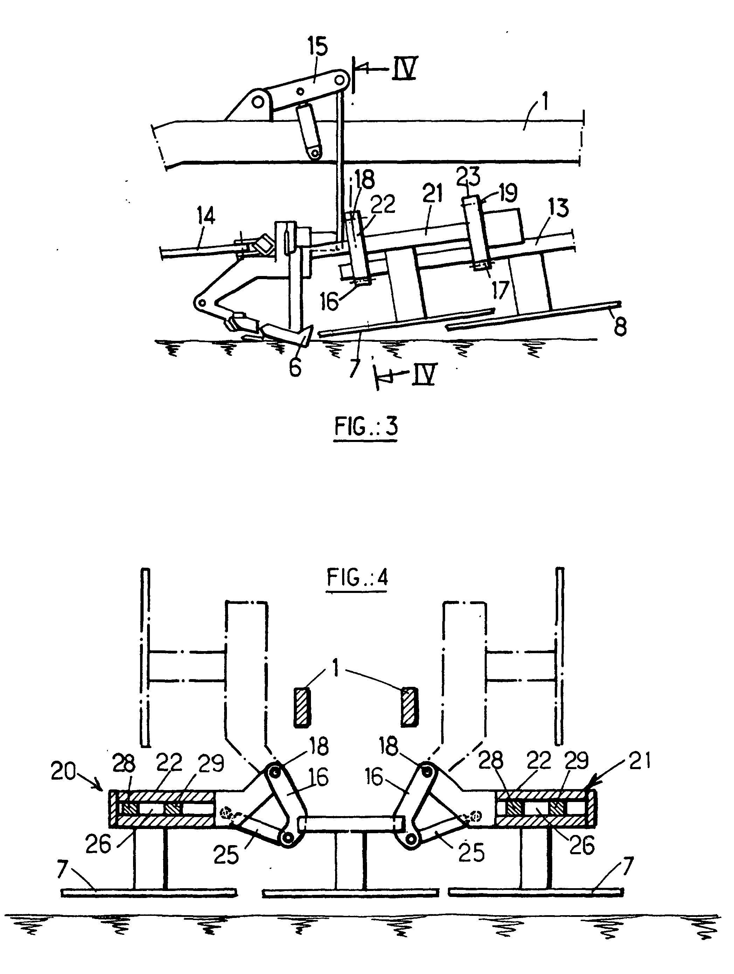

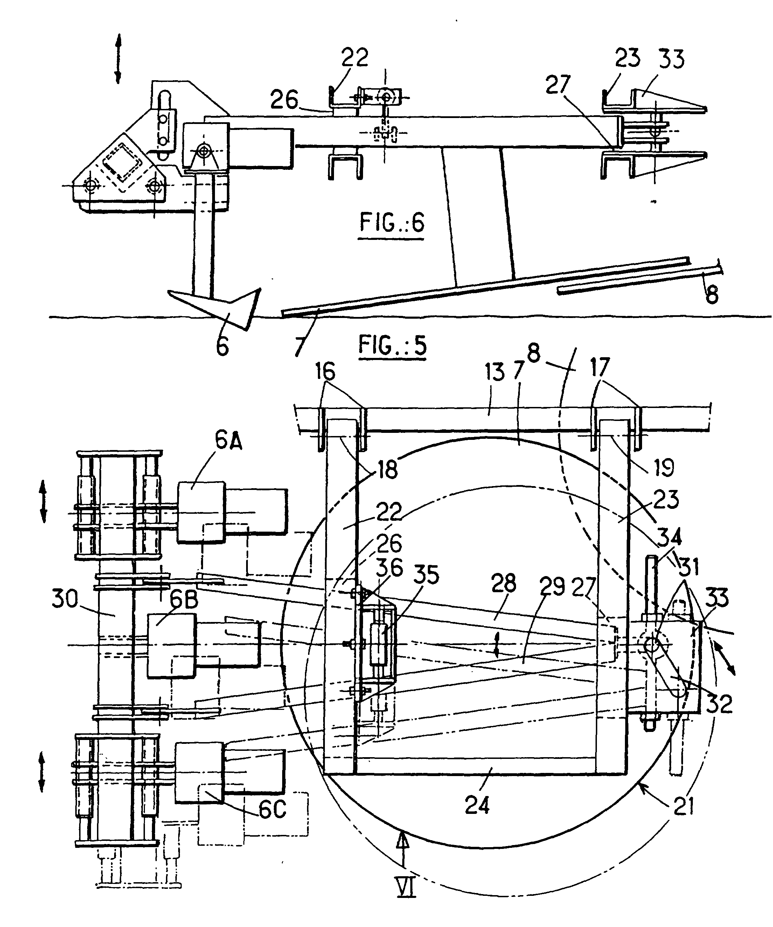

Sur chacun de ses côtés, le bâti central 13 porte deux supports fixes avant et arrière 16,17 dirigés à peu près verticalement et pourvus d'une articulation 18,19 à axe longitudinal, à leur partie supérieure, les axes des articulations 18,19 étant confondus. Sur les articulations 18,19 sont montés, de chaque côté du bâti central 13, des cadres intermédiaires 20,21 en forme de U (figures 4 et 5).

Chaque cadre intermédiaire est constitué d'une traverse avant 22 et d'une traverse arrière 23, voir figure 5. Une extrémité de chaque traverse est montée sur une articulation 18 ou 19, et les extrémités opposées des traverses sont reliées entre elles par un longeron 24. Les supports arrière 17 et les traverses arrière 23 n'ont pas été représentés à la figure 4.

Des vérins 25 permettent de faire pivoter chacun des cadres intermédiaires 20,21 autour de l'axe commun des articulations 18,19 correspondantes.

Chaque traverse avant 22 présente, dans sa partie centrale, une lumière allongée horizontalement 26. Chaque traverse arrière 23 présente également une lumière allongée horizontalement 27, mais de plus faible extension. Par "horizontalement", on entend ici que les lumières 26,27 sont dans le plan du cadre intermédiaire 20 ou 21.

Deux bras porteurs 28,29 passent chacun dans les deux lumières 26,27 des traverses d'un cadre 20 ou 21. Les bras porteurs sont reliés chacun, dans leur partie avant, à une traverse porteuse 30, qui porte elle-même des outils d'arrachage 6 dont seule la partie supérieure est représentée aux figures 5 et 6.

Les bras porteurs 28,29 et la traverse porteuse 30 constituent ensemble un "bâti porteur latéral" au sens indiqué plus haut, et qui porte un disque de ramassage 7 associé aux outils d'arrachage 6 portés par la traverse 30.

Les bras porteurs 28,29 sont reliés entre eux, à leur partie arrière, de façon fixe, et portent un pivot 31 à axe vertical, situé en arrière de la traverse 23. Par "vertical", on entend ici perpendiculaire au plan du bâti latéral. Le pivot 31 est guidé dans une lumière allongée 32 d'une pièce de guidage 33 solidaire de la traverse 23. La lumière 32 est oblique par rapport à la traverse 23 pour des raisons qu'on exposera ci-après. Un vérin à double effet 34 permet de déplacer le pivot 31 dans la lumière 32.

Un autre vérin à double effet 35 est porté par un support 36 réglable en position le long de la traverse 22. Le vérin 35 et son support 36 permettant d'agir sur le bâti porteur latéral 28,29,30 pour le déplacer dans le sens transversal, ou de le faire pivoter autour de l'axe du pivot 31, les bras porteurs 28,29 coulissant dans les lumières 26,27.

Lorsqu'on déplace le pivot 31 dans la lumière 32 sous l'action du vérin 34 en même temps qu'on déplace dans le sens convenable le vérin 35 et son support 36, le disque de ramassage 7 porté par le bâti latéral 28,29,30 se déplace selon un trajet à peu près tangentiel par rapport au disque de transfert 8 qui le suit, et qui est porté par le bâti central. Ainsi, les disques 7 et 8 restent sensiblement dans une position relative optimale. Le vérin 35 sert de plus à ajuster l'orientation des outils 6 portés par la traverse 30 par rapport au châssis central (1), c'est-à-dire à la direction de déplacement de la machine, par rotation autour du pivot 31.

Sur la figure 5 on a représenté en trait plein une position extrême du bâti latéral, qui correspond à la partie droite de la figure 4, et, en trait mixte, la position qui correspond à la partie gauche de la figure 4.

La traverse porteuse 30 porte trois outils d'arrachage 6A,6B,6C.

L'outil central 6B est fixe par rapport à la poutre porteuse 30, il est placé entre les deux bras porteurs 28,29. Les outils latéraux 6A,6C peuvent coulisser le long de la poutre porteuse 30, de façon à s'adapter à des écartements différents entre lignes de végétaux à arracher.

On comprendra que, si l'écartement entre lignes varie, en plus du réglage de l'écartement entre les outils 6A,6B,6C, il faudra régler l'écartement entre les outils portés par le bâti latéral et ceux qui sont portés par le bâti central 13, ce qui se fera à l'aide des vérins 34,35 et du support 36.

On observera, à l'aide de la figure 4, que l'action des vérins 25 permet de faire pivoter les cadres intermédiaires 20,21 d'environ 90° à partir de leur position du travail jusque dans une position de route, où les outils d'arrachage et le disque de ramassage ne dépassent pas hors du gabarit autorisé par les règlements.

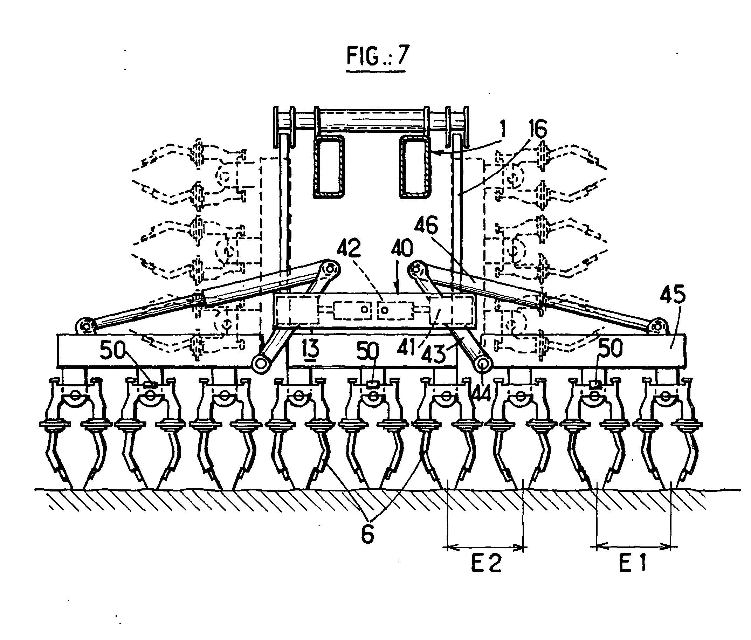

La figure 7 est relative à une variante du dispositif décrit ci-dessus.

Le châssis 1, et le bâti central 13 sont sensiblement identiques à ceux des figures 1 et 2, toutefois le bâti central 13 ne porte pas de supports fixes, mais, à sa partie supérieure, une pièce de liaison 40, en forme de tube transversal, à section rectangulaire. Dans cette pièce de liaison peuvent coulisser deux supports 41, actionnés par deux vérins 42 agissant en sens opposé. Chaque support 41 porte, par l'intermédiaire d'un bras 43 muni d'un pivot 44, un bâti porteur latéral 45, qui, comme le bâti central 13, porte trois outils d'arrachage 6. Un vérin 46 agit entre le support 41 et le bâti latéral 45 de façon à faire pivoter ce dernier autour du pivot 44.

Cette disposition permet à la fois de déplacer dans le sens transversal les bâtis latéraux 45 par rapport au bâti central 13, à l'aide des vérins 42 et en même temps de leur donner une inclinaison par rapport à la verticale différente de celle du bâti central 13, à l'aide des vérins 46. La course du vérin 46 et la position des différents organes sont calculées pour que les bâtis latéraux 43 puissent atteindre une position verticale, représentée en tirets sur la figure 7, et que, dans cette position, les outils d'arrachage 6 ne débordent pas hors du gabarit réglementaire.

Les machines décrites aux figures sont des machines à neuf socs, divisés en trois groupes de trois. On peut faire varier l'écartement entre les groupes de socs à l'aide des vérins 34,35 ou 42, ce qui permet de traiter des champs où on a utilisé une machine de semis à trois rangs ou six rangs. L'homme de métier comprendra qu'il serait facile de concevoir des machines ayant un nombre de socs différent.

Des moyens, non représentés à la figure 7, permettent de régler l'écartement E1 entre les outils portés par chaque bâti central ou latéral, de façon par exemple à régler l'écartement des outils 6 à 45 ou 50 centimètres, qui sont les espacements habituels.

Si les outils portés par deux bâtis porteurs adjacents arrachent les betteraves mises en place lors d'une même passe de la machine de semis, le vérin 42 correspondant sera réglé pour que l'intervalle E2 entre les outils adjacents portés par des bâtis différents soit égal à E1. Si les deux bâtis porteurs arrachent les betteraves provenant de deux passes différentes de la machine de semis, le conducteur de la machine de récolte pourra agir sur le vérin 42, ou le vérin 35 dans le cas des figures 3-6, pour obtenir une valeur de E2 différente, si cela est nécessaire.

On a désigné de façon symbolique en 50 des capteurs portés par des outils d'arrachage de chacun des bâtis porteurs. Ces capteurs sont sensibles à la position de l'outil par rapport à la ligne des tubercules et/ou à la surface du sol. Les signaux émis par ces capteurs sont utilisés par le conducteur de la machine pour commander les vérins 25,34,35 ou 42 et 46 de façon à optimiser la position des différents outils 6 par rapport au sol et aux lignes de tubercules.

En variante, les signaux des capteurs 50 peuvent être transmis à un organe de commande, comme un microprocesseur, qui commande automatiquement les vérins.

## Revendications

1. Machine d'arrachage de racines ou tubercules cultivés en lignes à peu près parallèles, cette machine étant capable de se déplacer dans une direction parallèle auxdites lignes, et comportant un châssis principal (1) sur lequel sont montés au moins deux bâtis porteurs (13;28, 29,30) portant chacun un outil d'arrachage ou un groupe d'outils d'arrachage (6), chaque outil d'arrachage étant conçu pour travailler en pénétrant dans le sol pendant le déplacement de la machine, au moins un bâti porteur (28,29,30) étant mobile en rotation par rapport au châssis principal (1) autour d'une articulation longitudinale (18, 19), **caractérisée en ce qu'**elle comprend des moyens moteurs (34,35) pour déplacer ledit bâti porteur dans une direction horizontale, perpendiculaire à la direction de déplacement, sur un cadre intermédiaire (20,21) monté sur ladite articulation (18,19), le bâti porteur (28,29,30) pouvant coulisser sur ce cadre intermédiaire en se rapprochant ou s'écartant de l'articulation (18,19).

2. Machine selon la revendication 1, **caractérisée en ce qu'**elle comprend en outre d'autres moyens moteurs (25) agissant sur ledit cadre (20, 21) pour modifier sa hauteur, et/ou son inclinaison dans un plan perpendiculaire à la direction de déplacement par rapport au châssis principal de la machine.

3. Machine selon la revendication 1 ou 2, **caractérisée en ce que** ledit bâti porteur (28,29,30) est mobile en rotation autour de ladite articulation (18,19)longitudinale, jusqu'à une position convenant aux déplacements de la machine sur route.

4. Machine selon l'une des revendications 1 à 3, **caractérisée en ce que** chaque bâti porteur (13;28, 29,30;45) porte plusieurs outils d'arrachage (6), et est pourvu de moyens de réglage de l'écartement entre deux outils d'arrachage.

5. Machine selon l'une des revendications 1 à 4, dans laquelle chaque bâti porteur (28, 29, 30) porte un disque de ramassage (7) qui coopère avec les outils d'arrachage (6) porté par le même bâti porteur, et qui déverse les objets arrachés sur un disque de transfert (8) qui est fixe par rapport au châssis central (1),
**caractérisée en ce qu'**elle comprend des moyens (32, 34,35) pour déplacer le disque de ramassage (7) par rapport au disque de transfert (8) associé, jusqu'à une position relative prédéterminée lorsque le bâti porteur se déplace par rapport au châssis central (1).

6. Machine selon l'une des revendications 1 à 5, **caractérisée en ce qu'**un bâti porteur (28,29,30) peut pivoter autour d'un axe vertical (31) afin de contrôler l'orientation des outils d'arrachage (6) par rapport au châssis central (1).

## Patentansprüche

1. Maschine zum Ziehen von in annähernd parallelen Reihen angebauten Wurzeln oder Knollen, die sich in einer zu diesen Reihen parallelen Richtung bewegen kann und ein Hauptgestell (1) aufweist, auf dem mindestens zwei Tragrahmen (13;28,29,30) montiert sind, die jeweils ein Ziehwerkzeug oder eine Gruppe von Ziehwerkzeugen (6) tragen, deren jedes so ausgelegt ist, dass es während der Bewegung der Maschine arbeitet, indem es in den Boden eintritt, wobei mindestens ein Tragrahmen (28,29,30) bezüglich des Hauptgestells (1) um ein Längsgelenk (18,19) drehbar ist, **dadurch gekennzeichnet, dass** sie Antriebsmittel (34,35) aufweist, um den Tragrahmen in einer zu der Bewegungsrichtung senkrechten horizontalen Richtung auf einem an dem Gelenk (18,19) montierten Zwischenrahmen (20,21) zu bewegen, wobei der Tragrahmen (28,29,30) auf diesem Zwischenrahmen gleiten kann, indem er sich dem Gelenk (18,19) nähert oder sich von diesem entfernt.

2. Maschine nach Anspruch 1, **dadurch gekennzeichnet, dass** sie ferner andere Antriebsmittel (25) aufweist, die auf den Rahmen (20,21) einwirken, um seine Höhe und/oder seine Neigung in einer zur Bewegungsrichtung senkrechten Ebene bezüglich des Hauptgestells der Maschine zu ändern.

3. Maschine nach Anspruch 1 oder 2, **dadurch gekennzeichnet, dass** der Tragrahmen (28,29,30) um das Längsgelenk (18,19) bis in eine Stellung drehbar ist, die für die Bewegungen der Maschine auf der Straße geeignet ist.

4. Maschine nach einem der Ansprüche 1 bis 3, **dadurch gekennzeichnet, dass** jeder Tragrahmen (13;28,29,30;45) mehrere Ziehwerkzeuge (6) trägt und mit Mitteln zur Einstellung des Abstandes zwischen zwei Ziehwerkzeugen versehen ist.

5. Maschine nach einem der Ansprüche 1 bis 4, bei der jeder Tragrahmen (28,29,30) eine Sammelscheibe (7) trägt, die mit den vom selben Tragrahmen getragenen Ziehwerkzeugen (6) zusammenwirkt und die ausgezogenen Objekte auf eine bezüglich des zentralen Gestells (1) feststehende Förderscheibe (8) schüttet, **dadurch gekennzeichnet, dass** sie Mittel (32,34,35) aufweist, um die Sammelscheibe (7) bezüglich der zugeordneten Förderscheibe (8) bis in eine vorbestimmte Relativstellung zu bewegen, wenn der Tragrahmen sich bezüglich des zentralen Gestells (1) bewegt.

6. Maschine nach einem der Ansprüche 1 bis 5, **dadurch gekennzeichnet, dass** ein Tragrahmen (28,29,30) zur Steuerung der Ausrichtung der Ziehwerkzeuge (6) bezüglich des zentralen Gestells (1) um eine vertikale Achse (31) schwenkbar ist.

## Claims

1. A machine for uprooting roots or tubers grown in approximately parallel rows, said machine being capable of moving in a direction parallel to said rows and including a main chassis (1) on which are mounted at least two support frames (13; 28, 29, 30) each carrying an uprooting tool or a group of uprooting tools (6), each uprooting tool being designed to work by penetrating into the ground as the machine is moving, and a support frame (28, 29, 30) being rotatable relative to the main chassis (1) about a longitudinal articulation (18, 19), which machine is **characterized in that** it includes drive means (34, 35) for moving said support frame in a horizontal direction, perpendicular to the direction of movement, on an intermediate frame (20, 21) mounted on said articulation (18, 19), the support frame (28, 29, 30) being able to slide on said intermediate frame towards or away from the articulation (18, 19).

2. A machine according to claim 1, **characterized in that** it further includes drive means (25) acting on said frame (20, 21) to modify its height and/or its inclination in a plane perpendicular to the direction of movement relative to the main chassis of the machine.

3. A machine according to claim 1 or claim 2, **characterized in that** said support frame (28, 29, 30) is rotatable about said longitudinal articulation (18, 19) up to a position suitable for the machine to travel on roads.

4. A machine according to any of claims 1 to 3, **characterized in that** each support frame (13; 28, 29, 30; 45) supports a plurality of uprooting tools (6) and is provided with means for adjusting the distance between two uprooting tools.

5. A machine according to any of claims 1 to 4 wherein each support frame (28, 29, 30) supports a pick-up disc (7) that cooperates with the uprooting tools (6) carried by the same support frame and which tips the uprooted objects onto a transfer disc (8) that is fixed relative to the central chassis (1),
which machine is **characterized in that** it includes means (32, 34, 35) for moving the pick-up disc (7) relative to the associated transfer disc (8) up to a predetermined relative position when the support frame is moving relative to the central chassis (1).

6. A machine according to any of claims 1 to 5, **characterized in that** the support frame (28, 29, 30) can pivot about a vertical axis (31) in order to control the orientation of the uprooting tools (6) relative to the central chassis (1).
